# EUROPÄISCHE PATENTANMELDUNG

(11) **EP 3 184 215 A1**
(43) Veröffentlichungstag der Anmeldung: **28.06.2017**
(21) Anmeldenummer: 15202109.3
(22) Anmeldetag: 22.12.2015
(51) Int. Cl.: B23B 51/04

(54) **SET AUS MEHREREN BOHRSCHAFTABSCHNITTEN ZUM AUFBAU EINER BOHRKRONE**

(71) Anmelder: HILTI Aktiengesellschaft, 9494 Schaan (LI)
(72) Erfinder: Mueller, Matthias, 9470 Buchs (CH); Amman, Christoph, 9486 Schaanwald (LI); Hoop, Matthaeus, 9492 Eschen (LI)
(74) Vertreter: Hilti Aktiengesellschaft Corporate Intellectual Property

(57) **Zusammenfassung**

Set aus mehreren Bohrschaftabschnitten (12) zum Aufbau einer Bohrkrone (10), aufweisend einen ersten Bohrschaftabschnitt (12) mit einem ersten Bohrschaft (18) und einem ersten Kupplungsstück (19) und einen zweiten Bohrschaftabschnitt mit einem zweiten Bohrschaft und einem zweiten Kupplungsstück. Das erste Kupplungsstück (19) weist eine durchgehende erste Innenbohrung mit einem ersten Öffnungsdurchmesser und das zweite Kupplungsstück weist eine durchgehende zweite Innenbohrung mit einem zweiten Öffnungsdurchmesser auf. Der erste Öffnungsdurchmesser ist grösser als der erste Innendurchmesser des ersten Bohrschaftes und der zweite Öffnungsdurchmesser ist grösser oder gleich dem zweiten Innendurchmesser des zweiten Bohrschaftes.

## Beschreibung

### Technisches Gebiet

Die vorliegende Erfindung betrifft ein Set aus mehreren Bohrschaftabschnitten zum Aufbau einer Bohrkrone gemäß dem Oberbegriff des Anspruchs 1.

### Stand der Technik

Bohrkronen bestehen aus mehreren Bohrkronenabschnitten, die als Schneidabschnitt, Bohrschaftabschnitt und Aufnahmeabschnitt ausgebildet sind. Der Schneidabschnitt umfasst einen Ringabschnitt und ein oder mehrere Schneidsegmente, die mit dem Ringabschnitt verschweißt, verlötet, verschraubt oder in einer anderen geeigneten Befestigungsart befestigt sind. Die Schneidsegmente sind ringförmig angeordnet und bilden in einer Ebene senkrecht zur Bohrachse einen Schneidring mit einem Innendurchmesser, einem Außendurchmesser und einer Segmentbreite. Der Bohrschaftabschnitt umfasst einen zylinderförmigen Bohrschaft, der in einer Ebene senkrecht zur Bohrachse eine Ringform mit einem Innendurchmesser, einem Außendurchmesser und einer Schaftbreite aufweist. Der Aufnahmeabschnitt umfasst einen Deckel und ein Einsteckende, über das die Bohrkrone in der Werkzeugaufnahme eines Kernbohrgerätes befestigt wird. Für die Größenverhältnisse zwischen dem Bohrschaft und dem Schneidring gilt, dass der Innendurchmesser des Bohrschaftes grösser als der Innendurchmesser des Schneidringes ist, der Außendurchmesser des Bohrschaftes kleiner als der Außendurchmesser des Schneidringes ist und die Schaftbreite des Bohrschaftes kleiner als die Segmentbreite des Schneidringes ist.

Der Bohrschaftabschnitt ist über eine erste Verbindung mit dem Aufnahmeabschnitt und über eine zweite Verbindung mit dem Schneidabschnitt verbunden. Die erste Verbindung und die zweite Verbindung können als lösbare Verbindungen oder als nicht-lösbare Verbindungen ausgebildet sein. Bekannt sind Bohrkronen mit einer lösbaren ersten und einer lösbaren zweiten Verbindung, Bohrkronen mit einer lösbaren ersten und einer nicht-lösbaren zweiten Verbindung, Bohrkronen mit einer nicht-lösbaren ersten und einer lösbaren zweiten Verbindung und Bohrkronen mit einer nicht-lösbaren ersten und einer nicht-lösbaren zweiten Verbindung. Bei Bohrkronen mit einer lösbaren zweiten Verbindung sind der Ringabschnitt und der Bohrschaft lösbar verbunden, beispielsweise über kombinierte Steck- und Stiftverbindungen mit einem losen Stiftelement, wie sie in WO 2013/093060 A1 beschrieben sind, oder über kombinierte Steck- und Stiftverbindungen mit einem festen Stiftelement, wie sie in WO 2014/096360 A1 und WO2014/096366 A1 beschrieben. Bei Bohrkronen mit einer nicht-lösbaren zweiten Verbindung können der Ringabschnitt und der Bohrschaft monolithisch ausgebildet sein und die gleichen Innen- und Außendurchmesser aufweisen; alternativ kann der Ringabschnitt stoffschlüssig mit dem Bohrschaft verbunden sein.

EP 0 314 123 B1 offenbart eine Bohrkrone mit einer lösbaren ersten Verbindung zwischen dem Bohrschaftabschnitt und dem Aufnahmeabschnitt. Der Bohrschaftabschnitt umfasst neben dem zylinderförmigen Bohrschaft ein Kupplungsstück, das mit dem Bohrschaft auf der dem Schneidabschnitt abgewandten Seite verbunden ist. Das Kupplungsstück umfasst eine durchgehende Innenbohrung mit einem Öffnungsdurchmesser und ein erstes Verbindungselement. Der Aufnahmeabschnitt umfasst neben dem Deckel und Einsteckende ein Kupplungsgegenstück, das ein zweites Verbindungselement aufweist. Das erste Verbindungselement des Kupplungsstücks und das zweite Verbindungselement des Kupplungsgegenstücks bilden die lösbare erste Verbindung der Bohrkrone, die als Bajonett-Verbindung ausgebildet ist. Die aus EP 0 314 123 B1 bekannte Bohrkrone weist Nachteile auf, wenn der Bohrkern in der Bohrkrone steckt und nach dem Kernbohren vom Bediener aus der Bohrkrone entfernt werden muss.

### Darstellung der Erfindung

Die Aufgabe der vorliegenden Erfindung besteht demgegenüber darin, ein Set aus mehreren Bohrschaftabschnitten zum Aufbau einer Bohrkrone dahingehend weiterzuentwickeln, dass das Entfernen eines Bohrkerns, der in der Bohrkrone steckt, für den Bediener vereinfacht wird. Dabei soll der Fertigungsaufwand bei der Herstellung der Bohrschaftabschnitte möglichst gering sein.

Diese Aufgabe wird bei dem eingangs genannten Set aus mehreren Bohrschaftabschnitten erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass der erste Öffnungsdurchmesser d₁ der ersten Innenbohrung grösser als der erste Innendurchmesser d_{I1} des ersten Bohrschaftes ist und der zweite Öffnungsdurchmesser d₂ der zweiten Innenbohrung grösser oder gleich dem zweiten Innendurchmesser d_{I2} des zweiten Bohrschaftes ist, wobei die kleinste Abmessung einer Innenbohrung als Öffnungsdurchmesser der Innenbohrung definiert ist.

Das erfindungsgemäße Set umfasst einen ersten und zweiten Bohrschaftabschnitt, die sich im Innendurchmesser der Bohrschäfte voneinander unterscheiden. Die Bohrschaftabschnitte umfassen jeweils einen zylinderförmigen Bohrschaft und ein Kupplungsstück, das mit dem Bohrschaft verbunden ist. Der erste Bohrschaftabschnitt weist ein erstes Kupplungsstück mit einer durchgehenden ersten Innenbohrung und der zweite Bohrschaftabschnitt ein zweites Kupplungsstück mit einer durchgehenden zweiten Innenbohrung auf. Das erste und zweite Kupplungsstück werden dazu genutzt, den Bohrkern aus der Bohrkrone zu entfernen.

Die Schneidsegmente bilden einen Schneidring mit einem Innendurchmesser und einem Außendurchmesser. Der Innendurchmesser des Schneidrings legt den Durchmesser des Bohrkerns und der Außendurchmesser des Schneidrings den Durchmesser des Bohrlochs fest. Die Innenbohrungen des ersten und zweiten Kupplungsstücks sind so gestaltet, dass die Öffnungsdurchmesser der Innenbohrungen grösser als der Durchmesser des Bohrkerns sind. Um ein Verklemmen des Bohrkerns in der Innenbohrung zu verhindern, ist der erste Öffnungsdurchmesser d₁ der ersten Innenbohrung grösser als der erste Innendurchmesser d_{I1} des ersten Bohrschaftes und der zweite Öffnungsdurchmesser d₂ der zweiten Innenbohrung ist grösser oder gleich dem zweiten Innendurchmesser d_{I2} des zweiten Bohrschaftes.

Bevorzugt weisen das erste und zweite Kupplungsstück eine im Wesentlichen identische Geometrie auf. Der erste und zweite Bohrschaftabschnitt des erfindungsgemäßen Sets unterscheiden sich im Innendurchmesser der Bohrschäfte, wobei der zweite Innendurchmesser d_{I2} des zweiten Bohrschaftes grösser als der erste Innendurchmesser d_{I1} des ersten Bohrschaftes ist. Wenn das erste und zweite Kupplungsstück eine identische Geometrie aufweisen, kann ein identisches Kupplungsstück für das erste und zweite Kupplungsstück verwendet und der Fertigungsaufwand reduziert werden. Die Anpassung des Kupplungsstücks an den Innen- und Außendurchmesser des Bohrschaftes kann beispielsweise über einen Zwischenring erfolgen.

Besonders bevorzugt sind das erste Kupplungsstück aus einem ersten Kupplungsmaterial und das zweite Kupplungsstück aus einem zweiten Kupplungsmaterial hergestellt. Die Auswahl eines geeigneten Kupplungsmaterials hängt unter anderem von den Belastungen des ersten und zweiten Kupplungsstücks ab. Die Verwendung von Kunststoff als Kupplungsmaterial bietet ein geringeres Gewicht als Stahl, hat aber den Nachteil einer geringeren Festigkeit. Wenn der erste und zweite Bohrschaftabschnitt unterschiedlichen Belastungen ausgesetzt sind, bietet sich die Verwendung von verschiedenen Kupplungsmaterialen an.

Besonders bevorzugt sind das erste und zweite Kupplungsstück als erstes Kupplungsteil ausgebildet. Wenn das erste und zweite Kupplungsstück eine identische Geometrie aufweisen und aus dem gleichen Kupplungsmaterial hergestellt sind, kann für das erste und zweite Kupplungsstück ein identisches Kupplungsstück verwendet werden. Um den Fertigungsaufwand für das erste und zweite Kupplungsstück zu reduzieren, kann der erste und zweite Bohrschaft, die sich im Innendurchmesser unterscheiden, mit dem identischen Kupplungsstück verbunden werden, das als erstes Kupplungsteil bezeichnet wird.

In einer bevorzugten Weiterentwicklung weist das Set einen dritten Bohrschaftabschnitt mit einem dritten Bohrschaft, der eine Querschnittsform mit einem dritten Außendurchmesser d_{A3} und einem dritten Innendurchmesser d_{I3} aufweist, und einem dritten Kupplungsstück, das eine durchgehende dritte Innenbohrung mit einem dritten Öffnungsdurchmesser d₃ aufweist, wobei der dritte Innendurchmesser d_{I3} des dritten Bohrschaftes grösser als der zweite Innendurchmesser d_{I2} des zweiten Bohrschaftes ist, der dritte Öffnungsdurchmesser d₃ der dritten Innenbohrung grösser oder gleich dem dritten Innendurchmesser d_{I3} des dritten Bohrschaftes ist und das dritte Kupplungsstück vom ersten und zweiten Kupplungsstück verschieden ist.

Bevorzugt weist das Set einen vierten Bohrschaftabschnitt mit einem vierten Bohrschaft, der eine Querschnittsform mit einem vierten Außendurchmesser d_{A4} und einem vierten Innendurchmesser d_{I4} aufweist, und einem vierten Kupplungsstück, das eine durchgehende vierte Innenbohrung mit einem vierten Öffnungsdurchmesser d₄ aufweist, wobei der vierte Innendurchmesser d_{I4} des vierten Bohrschaftes grösser als der dritte Innendurchmesser d_{I3} des vierten Bohrschaftes ist und der vierte Öffnungsdurchmesser d₄ der vierten Innenbohrung grösser oder gleich dem vierten Innendurchmesser d_{I4} des vierten Bohrschaftes ist.

In einer bevorzugten Weiterentwicklung weisen das dritte und vierte Kupplungsstück eine im Wesentlichen identische Geometrie auf. Der dritte und vierte Bohrschaftabschnitt des erfindungsgemäßen Sets unterscheiden sich im Innendurchmesser der Bohrschäfte, wobei der vierte Innendurchmesser d_{I4} des vierten Bohrschaftes grösser als der dritte Innendurchmesser d_{I3} des dritten Bohrschaftes ist. Wenn das dritte und vierte Kupplungsstück eine identische Geometrie aufweisen, kann ein identisches Kupplungsstück für das dritte und vierte Kupplungsstück verwendet und der Fertigungsaufwand reduziert werden. Die Anpassung des Kupplungsstücks an den Innen- und Außendurchmesser des Bohrschaftes kann beispielsweise über einen Zwischenring erfolgen.

Bevorzugt sind das dritte Kupplungsstück aus einem ersten Kupplungsmaterial und das vierte Kupplungsstück aus einem zweiten Kupplungsmaterial hergestellt. Die Auswahl eines geeigneten Kupplungsmaterials hängt unter anderem von den Belastungen des ersten und zweiten Kupplungsstücks ab. Die Verwendung von Kunststoff als Kupplungsmaterial bietet ein geringeres Gewicht als Stahl, hat aber den Nachteil einer geringeren Festigkeit. Wenn der dritte und vierte Bohrschaftabschnitt unterschiedlichen Belastungen ausgesetzt sind, bietet sich die Verwendung von verschiedenen Kupplungsmaterialen an.

Besonders bevorzugt sind das dritte und vierte Kupplungsstück als zweites Kupplungsteil ausgebildet. Wenn das dritte und vierte Kupplungsstück eine identische Geometrie aufweisen und aus dem gleichen Kupplungsmaterial hergestellt sind, kann für das dritte und vierte Kupplungsstück ein identisches Kupplungsstück verwendet werden. Um den Herstellungsaufwand für das dritte und vierte Kupplungsstück zu reduzieren, kann der dritte und vierte Bohrschaft, die sich im Innendurchmesser unterscheiden, mit dem identischen Kupplungsstück verbunden werden, das als zweites Kupplungsteil bezeichnet wird.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Bohrkrone mit einem Schneidabschnitt, einem Bohrschaftabschnitt und einem Aufnahmeabschnitt;
- FIGN. 2A, B: ein Set aus dem Bohrschaftabschnitt der FIG. 1 (FIG. 2A) und einem weiteren Bohrschaftabschnitt (FIG. 2B) zum Aufbau der Bohrkrone der FIG. 1;
- FIGN. 3A, B: einen Längsschnitt durch den Bohrschaftabschnitt der FIG. 2A entlang der Schnittlinie A-A in FIG. 2A (FIG. 3A) und einen Längsschnitt durch den weiteren Bohrschaftabschnitt der FIG. 2B entlang der Schnittlinie B-B in FIG. 2B (FIG. 3B);
- FIGN. 4A, B: ein Set aus einem dritten Bohrschaftabschnitt (FIG. 4A) und einem vierten Bohrschaftabschnitt (FIG. 4B) zum Aufbau einer weiteren Bohrkrone; und
- FIGN. 5A, B: einen Längsschnitt durch den dritten Bohrschaftabschnitt der FIG. 4A entlang der Schnittlinie A-A in FIG. 4A (FIG. 5A) und einen Längsschnitt durch den vierten Bohrschaftabschnitt der FIG. 4B entlang der Schnittlinie B-B in FIG. 4B (FIG. 5B).

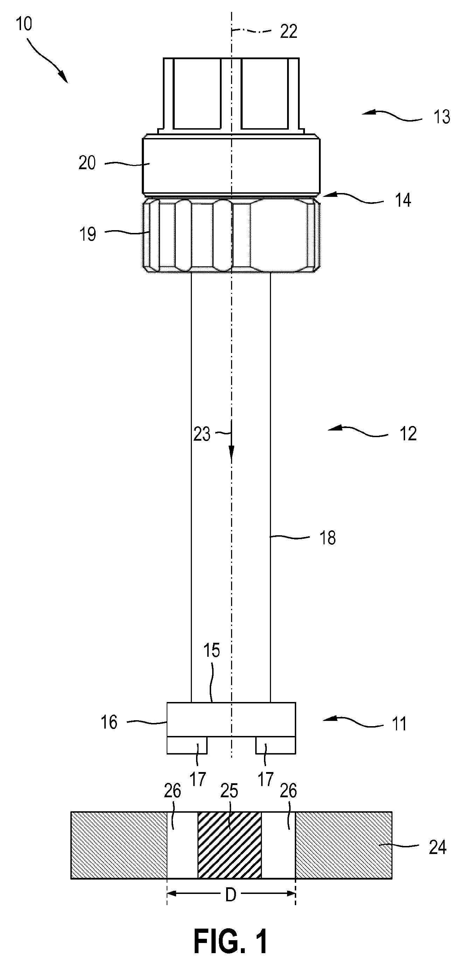

**FIG. 1** zeigt eine Bohrkrone **10,** die einen Schneidabschnitt **11,** einen Bohrschaftabschnitt **12** und einen Aufnahmeabschnitt **13** aufweist. Der Bohrschaftabschnitt 12 ist über eine lösbare erste Verbindung **14** mit dem Aufnahmeabschnitt 13 und über eine weitere Verbindung **15** mit dem Schneidabschnitt 11 verbindbar. Die weitere Verbindung 15 kann als lösbare oder nicht-lösbare Verbindung ausgebildet sein. Eine Verbindung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindung wird als nicht-lösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung. FIG. 1 zeigt eine Bohrkrone, bei der die weitere Verbindung 15 als nicht-lösbare Verbindung ausgebildet ist.

Der Schneidabschnitt 11 umfasst einen Ringabschnitt **16** und mehrere Schneidsegmente **17,** die mit dem Ringabschnitt 16 verbunden sind. Die Schneidsegmente 17 sind mit dem Ringabschnitt 16 verschweißt, verlötet, verschraubt oder in einer anderen geeigneten Befestigungsart am Ringabschnitt 16 befestigt. Der Bohrschaftabschnitt 12 umfasst einen zylinderförmigen Bohrschaft **18** und ein Kupplungsstück **19,** das mit dem Bohrschaft 18 verbunden ist. Der Aufnahmeabschnitt 13 umfasst ein Kupplungsgegenstück **20** und ein Einsteckende **21,** über das die Bohrkrone 10 in einer Werkzeugaufnahme eines Kernbohrgerätes befestigt wird.

Im Bohrbetrieb wird die Bohrkrone 10 vom Kernbohrgerät um eine Bohrachse **22** angetrieben und in einer Bohrrichtung **23** parallel zur Bohrachse 22 in das zu bearbeitende Werkstück **24** bewegt. Die Bohrkrone 10 erzeugt im Werkstück 24 einen Bohrkern **25** und ein Bohrloch **26** mit einem Bohrlochdurchmesser **D.** Die lösbare erste Verbindung 14 zwischen dem Kupplungsstück 19 des Bohrschaftabschnittes und dem Kupplungsgegenstück 20 des Aufnahmeabschnittes 13 kann dazu genutzt werden, den Bohrkern 25 aus der Bohrkrone 10 zu entfernen. Um den Bohrkern 25 zu entfernen, wird der Aufnahmeabschnitt 13 vom Bohrschaftabschnitt 12 entfernt und der Bohrkern 25 durch das Kupplungsstück 19 geschoben.

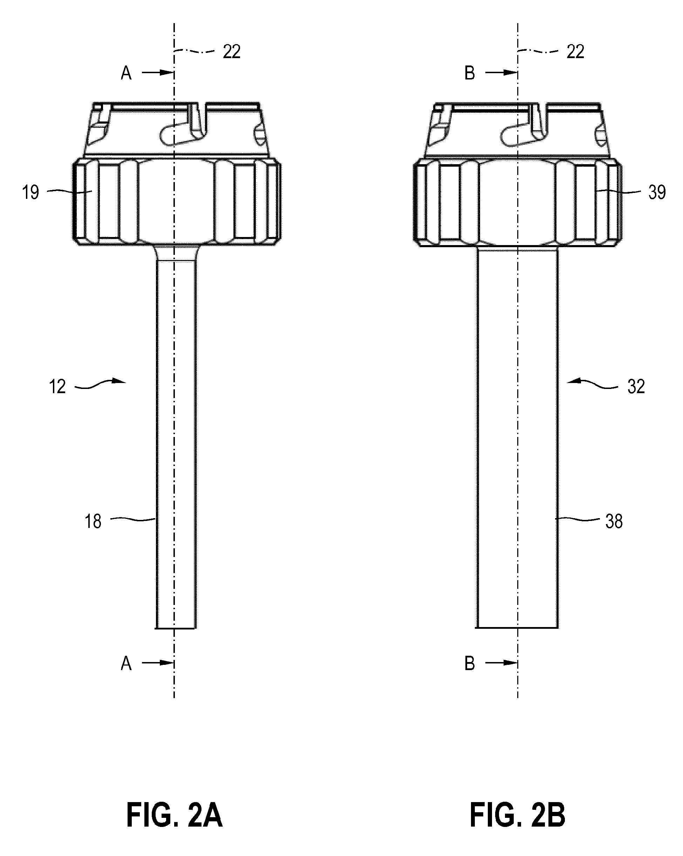

**FIGN. 2A****, B** zeigen ein Set aus dem Bohrschaftabschnitt 12 der FIG. 1 (FIG. 2A) und einem weiteren Bohrschaftabschnitt **32** (FIG. 2B) zum Aufbau der Bohrkrone 10. Der Bohrschaftabschnitt 12 wird im Weiteren als erster Bohrschaftabschnitt und der weitere Bohrschaftabschnitt 32 als zweiter Bohrschaftabschnitt bezeichnet. Zur Unterscheidung der Bohrschaftabschnitte 12, 32 werden die Komponenten des ersten Bohrschaftabschnittes 12 als erste Komponenten und die Komponenten des zweiten Bohrschaftabschnittes 32 als zweite Komponenten bezeichnet.

Der Aufnahmeabschnitt 13 ist mit dem ersten Bohrschaftabschnitt 12 und dem zweiten Bohrschaftabschnitt 32 verbindbar. Der erste Bohrschaftabschnitt 12 umfasst den ersten Bohrschaft 18 und das erste Kupplungsstück 19, das mit dem ersten Bohrschaft 18 verbunden ist. Der zweite Bohrschaftabschnitt 32 umfasst einen zweiten Bohrschaft **38** und ein zweites Kupplungsstück **39,** das mit dem zweiten Bohrschaft 38 verbunden ist. Der erste und zweite Bohrschaft 18, 38 unterscheiden sich im Innen- und Außendurchmesser des Bohrschaftes 18, 38, im Innendurchmesser und in der Schaftbreite des Bohrschaftes 18, 38 oder im Innendurchmesser, Außendurchmesser und in der Schaftbreite des Bohrschaftes 18, 38.

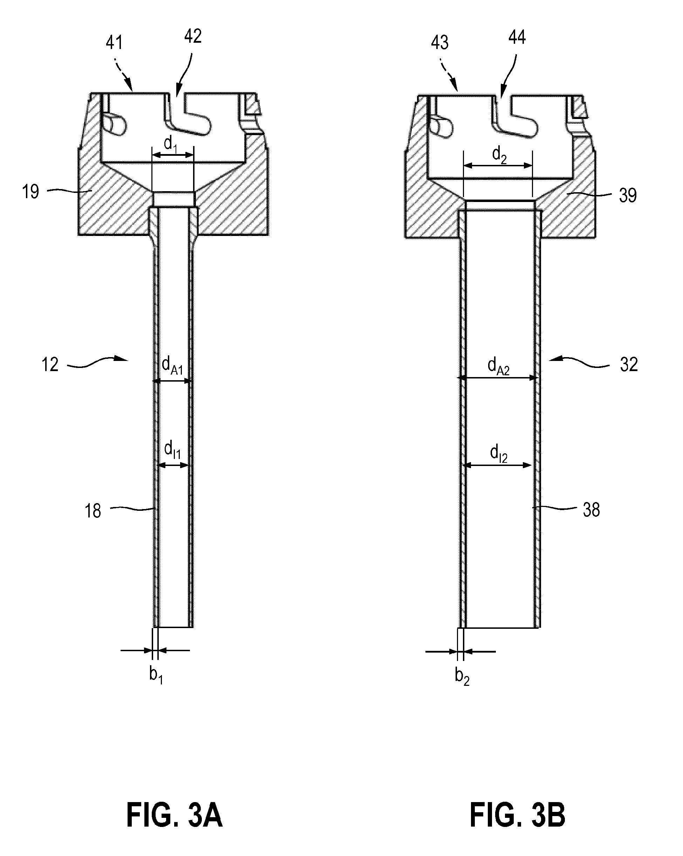

**FIGN. 3A****, B** zeigen einen Längsschnitt durch den ersten Bohrschaftabschnitt 12 der FIG. 2A entlang der Schnittlinie A-A in FIG. 2A (FIG. 3A) und einen Längsschnitt durch den zweiten Bohrschaftabschnitt 32 der FIG. 2B entlang der Schnittlinie B-B in FIG. 2B (FIG. 3B).

Der erste Bohrschaft 18 weist in einer Ebene senkrecht zur Bohrachse 22 eine ringförmige Querschnittsform mit einem ersten Innendurchmesser **d_{I1}**, einem ersten Außendurchmesser **d_{A1}** und einer ersten Schaftbreite **b₁** auf. Das erste Kupplungsstück 19 weist eine erste Innenbohrung **41** und ein erstes Verbindungselement **42** auf. Das erste Verbindungselement 42 ist in Form von L-förmigen Schlitzen ausgebildet und die erste Innenbohrung 41 ist durchgehend mit einem ersten Öffnungsdurchmesser **d₁** ausgebildet. Um ein Verklemmen des Bohrkerns 25 in der ersten Innenbohrung 41 zu verhindern, ist der erste Öffnungsdurchmesser d₁ grösser als der erste Innendurchmesser d_{I1} des ersten Bohrschaftes 18 (d₁ > d_{I1}).

Der zweite Bohrschaft 38 weist in einer Ebene senkrecht zur Bohrachse 22 eine ringförmige Querschnittsform mit einem zweiten Innendurchmesser **d_{I2},** einem zweiten Außendurchmesser **d_{A2}** und einer zweiten Schaftbreite **b₂** auf. Das zweite Kupplungsstück 39 weist eine zweite Innenbohrung **43** und ein zweites Verbindungselement **44** auf. Das zweite Verbindungselement 44 ist in Form von L-förmigen Schlitzen ausgebildet und die zweite Innenbohrung 43 ist durchgehend mit einem zweiten Öffnungsdurchmesser **d₂** ausgebildet. Um ein Verklemmen des Bohrkerns 25 in der zweiten Innenbohrung 43 zu verhindern, ist der zweite Öffnungsdurchmesser d₂ grösser als der zweite Innendurchmesser d_{I2} oder gleich dem zweite Innendurchmesser d_{I2} des zweiten Bohrschaftes 38 (d₂ ≥ d_{I2}).

Die erste und zweite Innenbohrung 41, 43 sind im Ausführungsbeispiel aus mehreren Abschnitten zusammengesetzt und bestehen jeweils aus einem zylinderförmigen Abschnitt, einem kegelstumpfförmigen Abschnitt und einem weiteren zylinderförmigen Abschnitt, wobei die kleinste Abmessung der Innenbohrung als Öffnungsdurchmesser definiert ist. Das erste und zweite Verbindungselement 42, 44 sind in Form von L-förmigen Schlitzen ausgebildet, die mit passenden Stiftelementen eines Kupplungsgegenstücks verbindbar sind.

Das erste Kupplungsstück 19 des ersten Bohrschaftabschnittes 12 und das zweite Kupplungsstück 39 des zweiten Bohrschaftabschnittes 32 weisen eine identische Geometrie auf und der erste Öffnungsdurchmesser d₁ des ersten Kupplungsstücks 19 entspricht dem zweiten Öffnungsdurchmesser d₂ des zweiten Kupplungsstücks 39. Die erste und zweite Innenbohrung 41, 43 sind so gestaltet, dass die Öffnungsdurchmesser d₁, d₂ grösser als der Durchmesser des Bohrkerns 25 sind.

Das erste Kupplungsstück 19 ist aus einem ersten Kupplungsmaterial und das zweite Kupplungsstück 39 aus einem zweiten Kupplungsmaterial hergestellt. Die Verwendung von Kunststoff als Kupplungsmaterial bietet ein geringeres Gewicht als Stahl, hat aber den Nachteil einer geringeren Festigkeit. Die Auswahl eines Kupplungsmaterials hängt unter anderem von den Belastungen des ersten und zweiten Kupplungsstücks 19, 39 ab. Alternativ können das erste und zweite Kupplungsstück 19, 39 aus dem gleichen Kupplungsmaterial hergestellt werden. Wenn das erste und zweite Kupplungsstück 19, 39 die gleiche Geometrie aufweisen und aus dem gleichen Kupplungsmaterial hergestellt sind, kann ein identisches Kupplungsstück für den ersten und zweiten Bohrschaftabschnitt 12, 32 verwendet werden, das im Folgenden als erstes Kupplungsteil bezeichnet wird. Wenn das erste Kupplungsteil aus Kunststoff hergestellt werden kann, werden die Fertigungskosten für das erste und zweite Kupplungsstück 19, 39 reduziert, da die Kosten pro Stück mit zunehmender Stückzahl sinken.

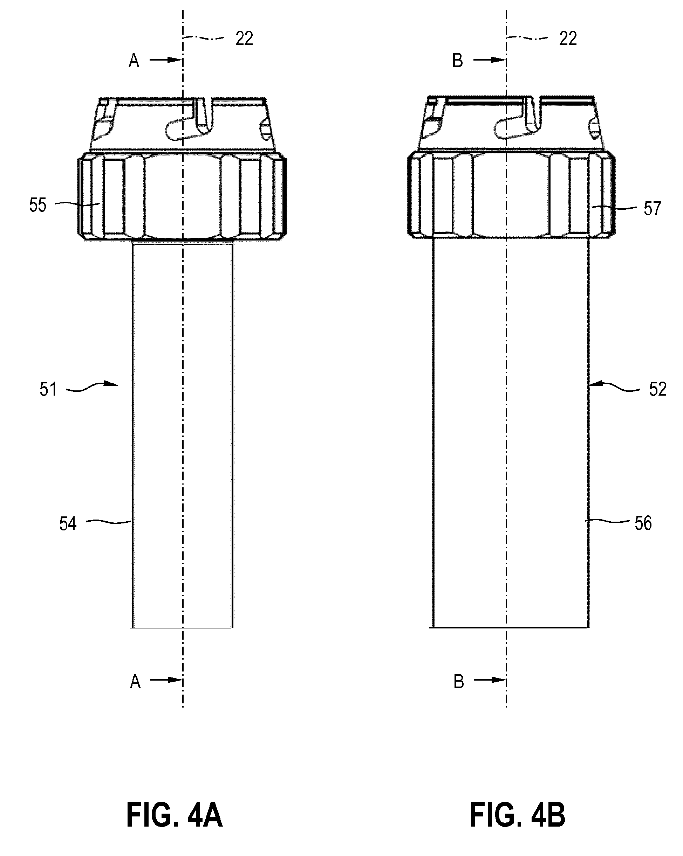

**FIGN. 4A****, B** zeigen einen dritten Bohrschaftabschnitt **51** (FIG. 4A) und einen vierten Bohrschaftabschnitt **52** (FIG. 4B), die ein weiteres Set aus Bohrschaftabschnitten zum Aufbau einer Bohrkrone bilden. Die Komponenten des dritten Bohrschaftabschnittes 51 werden als dritte Komponenten und die Komponenten des vierten Bohrschaftabschnittes 52 als vierte Komponenten bezeichnet.

Der dritte Bohrschaftabschnitt 51 umfasst einen dritten Bohrschaft **54** und ein drittes Kupplungsstück **55,** das mit dem dritten Bohrschaft 54 verbunden ist. Der vierte Bohrschaftabschnitt 52 umfasst einen vierten Bohrschaft **56** und ein viertes Kupplungsstück **57,** das mit dem vierten Bohrschaft 56 verbunden ist. Der dritte und vierte Bohrschaft 54, 56 unterscheiden sich im Innen- und Außendurchmesser des Bohrschaftes, im Innendurchmesser und in der Schaftbreite des Bohrschaftes oder im Innen- und Außendurchmesser und in der Schaftbreite des Bohrschaftes. Im Ausführungsbeispiel unterscheiden sich der dritte und vierte Bohrschaft 54, 56 im Innendurchmesser, im Außendurchmesser und in der Schaftbreite des Bohrschaftes.

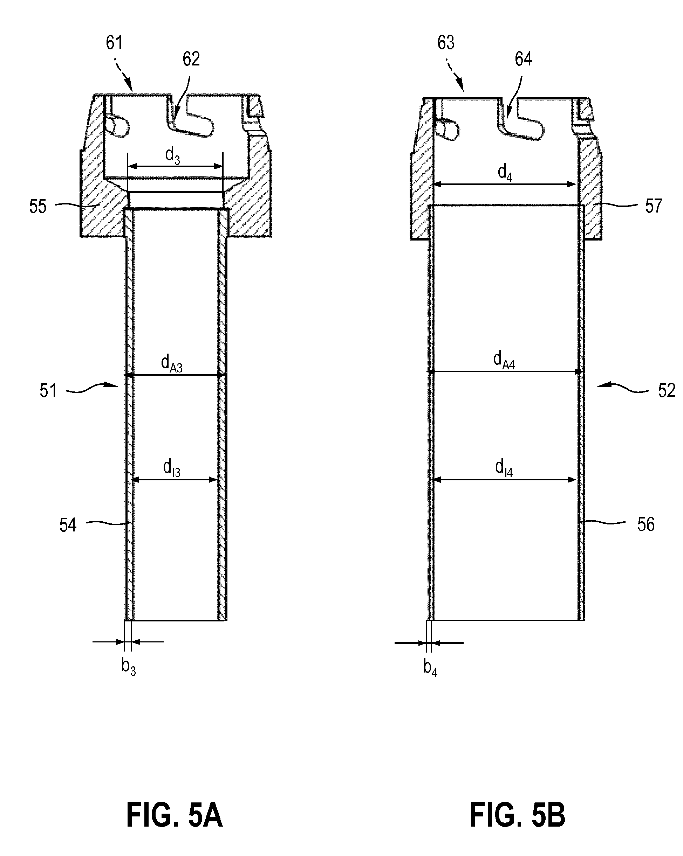

**FIGN. 5A****, B** zeigen einen Längsschnitt durch den dritten Bohrschaftabschnitt 51 der FIG. 4A entlang der Schnittlinie A-A in FIG. 4A (FIG. 5A) und einen Längsschnitt durch den vierten Bohrschaftabschnitt 52 der FIG. 4B entlang der Schnittlinie B-B in FIG. 4B (FIG. 5B).

Der dritte Bohrschaft 54 weist in einer Ebene senkrecht zur Bohrachse eine ringförmige Querschnittsform mit einem dritten Innendurchmesser **d_{I3}**, einem dritten Außendurchmesser **d_{A3}** und einer dritten Schaftbreite **b₃** auf. Das dritte Kupplungsstück 55 weist eine durchgehende dritte Innenbohrung **61** mit einem dritten Öffnungsdurchmesser **d₃** und ein drittes Verbindungselement **62** auf. Der dritte Öffnungsdurchmesser d₃ ist grösser als der dritte Innendurchmesser d_{I3} des dritten Bohrschaftes 54 (d₃ > d_{I3}).

Der vierte Bohrschaft 55 weist in einer Ebene senkrecht zur Bohrachse eine ringförmige Querschnittsform mit einem vierten Innendurchmesser **d_{I4},** einem vierten Außendurchmesser **d_{A4}** und einer vierten Schaftbreite **b₄** auf. Das vierte Kupplungsstück 57 weist eine durchgehende vierte Innenbohrung **63** mit einem vierten Öffnungsdurchmesser **d₄** und ein viertes Verbindungselement **64** auf. Der vierte Öffnungsdurchmesser d₄ ist grösser als der vierte Innendurchmesser d_{I4} oder gleich dem vierten Innendurchmesser d_{I4} des vierten Bohrschaftes 56 (d₄ ≥ d_{I4}). Im Ausführungsbeispiel stimmt der vierte Öffnungsdurchmesser d₄ mit dem vierten Innendurchmesser d_{I4} überein.

Die dritte und vierte Innenbohrung 61, 63 sind im Ausführungsbeispiel in Form eines Zylinders ausgebildet und der dritte und vierte Öffnungsdurchmesser d₃, d₄ entsprechen dem Durchmesser des Zylinders. Das dritte und vierte Verbindungselement 62, 64 sind in Form von L-förmigen Schlitzen ausgebildet, die mit passenden Stiftelementen eines Kupplungsgegenstücks verbindbar sind.

## Patentansprüche

1. Set aus mehreren Bohrschaftabschnitten (12, 32; 41, 42) zum Aufbau einer Bohrkrone (10), aufweisend:
▪ einen ersten Bohrschaftabschnitt (12) mit einem ersten Bohrschaft (18), der eine Querschnittsform mit einem ersten Außendurchmesser (d_{A1}) und einem ersten Innendurchmesser (d_{I1}) aufweist, und einem ersten Kupplungsstück (19), das eine durchgehende erste Innenbohrung (41) mit einem ersten Öffnungsdurchmesser (d₁) aufweist, und
▪ einen zweiten Bohrschaftabschnitt (32) mit einem zweiten Bohrschaft (38), der eine Querschnittsform mit einem zweiten Außendurchmesser (d_{A2}) und einem zweiten Innendurchmesser (d_{I2}) aufweist, und einem zweiten Kupplungsstück (39), das eine durchgehende zweite Innenbohrung (43) mit einem zweiten Öffnungsdurchmesser (d₂) aufweist, wobei der zweite Innendurchmesser (d_{I2}) des zweiten Bohrschaftes (38) grösser als der erste Innendurchmesser (d_{I1}) des ersten Bohrschaftes (18) ist,
**dadurch gekennzeichnet, dass** der erste Öffnungsdurchmesser (d₁) der ersten Innenbohrung (41) grösser als der erste Innendurchmesser (d_{I1}) des ersten Bohrschaftes (18) ist und der zweite Öffnungsdurchmesser (d₂) der zweiten Innenbohrung (43) grösser oder gleich dem zweiten Innendurchmesser (d_{I2}) des zweiten Bohrschaftes (32) ist.

2. Set nach Anspruch 1, **dadurch gekennzeichnet, dass** das erste und zweite Kupplungsstück (19, 39) eine im Wesentlichen identische Geometrie aufweisen.

3. Set nach einem der Ansprüche 1 bis 2, **dadurch gekennzeichnet, dass** das erste Kupplungsstück (19) aus einem ersten Kupplungsmaterial und das zweite Kupplungsstück (39) aus einem zweiten Kupplungsmaterial hergestellt ist.

4. Set nach Anspruch 2, **dadurch gekennzeichnet, dass** das erste und zweite Kupplungsstück (19, 39) als erstes Kupplungsteil ausgebildet sind.

5. Set nach einem der Ansprüche 1 bis 4, **gekennzeichnet durch** einen dritten Bohrschaftabschnitt (51) mit einem dritten Bohrschaft (54), der eine Querschnittsform mit einem dritten Außendurchmesser (d_{A3}) und einem dritten Innendurchmesser (d_{I3}) aufweist, und einem dritten Kupplungsstück (55), das eine durchgehende dritte Innenbohrung (61) mit einem dritten Öffnungsdurchmesser (d₃) aufweist, wobei der dritte Innendurchmesser (d_{I3}) grösser als der zweite Innendurchmesser (d_{I2}) ist, der dritte Öffnungsdurchmesser (d₃) der dritten Innenbohrung (61) grösser oder gleich dem dritten Innendurchmesser (d_{I3}) des dritten Bohrschaftes (53) ist und das dritte Kupplungsstück (55) vom ersten und zweiten Kupplungsstück (19, 39) verschieden ist.

6. Set nach Anspruch 5, **gekennzeichnet durch** einen vierten Bohrschaftabschnitt (52) mit einem vierten Bohrschaft (56), der eine Querschnittsform mit einem vierten Außendurchmesser (d_{A4}) und einem vierten Innendurchmesser (d_{I4}) aufweist, und einem vierten Kupplungsstück (57), das eine durchgehende vierte Innenbohrung (63) mit einem vierten Öffnungsdurchmesser (d₄) aufweist, wobei der vierte Innendurchmesser (d_{I4}) grösser als der dritte Innendurchmesser (d_{I3}) ist und der vierte Öffnungsdurchmesser (d₄) der vierten Innenbohrung (63) grösser oder gleich dem vierten Innendurchmesser (d_{I4}) des vierten Bohrschaftes (56) ist.

7. Set nach Anspruch 6, **dadurch gekennzeichnet, dass** das dritte und vierte Kupplungsstück (55, 57) eine im Wesentlichen identische Geometrie aufweisen.

8. Set nach einem der Ansprüche 6 bis 7, **dadurch gekennzeichnet, dass** das dritte Kupplungsstück (55) aus einem ersten Kupplungsmaterial und das vierte Kupplungsstück (57) aus einem zweiten Kupplungsmaterial hergestellt ist.

9. Set nach Anspruch 7, **dadurch gekennzeichnet, dass** das dritte und vierte Kupplungsstück (55, 57) als zweites Kupplungsteil ausgebildet sind.
